# EUROPEAN PATENT APPLICATION

(11) **EP 2 769 968 A1**
(43) Date of publication of application: **27.08.2014**
(21) Application number: 13197325.7
(22) Date of filing: 16.12.2013
(51) Int. Cl.: C04B 35/52, C04B 35/56, C04B 35/565, C04B 35/573, C04B 37/00, C04B 38/00

(54) **Fiber-reinforced ceramic composite material honeycomb and method for preparing the same**

(30) Priority: 22.02.2013 KR 20130019358
(71) Applicant: Korea Institute of Energy Research, Daejeon 305-343 (KR)
(72) Inventor: Kim, Se-Young, 102-202 Daejeon 305-707 (KR); Woo, Sang-Kuk, 305-772 Daejeon (KR); Han, In-Sub, 312-942 Chungcheongnam-do (KR); Seo, Doo-Won, 305-707 Daejeon (KR); Yu, Ji-Haeng, 302-318 Daejeon (KR); Joo, Jong-Hoon, 201-1005 Chungcheongbuk-do, 363-950 (KR); Kim, Sun-Dong, 305-750 Daejeon (KR)
(74) Representative: Dr. Weitzel & Partner

(57) **Abstract**

Disclosed herein is a fiber-reinforced ceramic composite material honeycomb, including: a plurality of inner tubes, each of which is made of a fiber-reinforced ceramic composite material; and an outer shell which is made of a fiber-reinforced ceramic composite material and which surrounds the plurality of inner tubes.

## Description

### CROSS REFERENCE TO RELATED APPLICATION

This application claims the benefit of Korean Patent Application No. 10-2013-0019358, filed on February 22, 2013, which is hereby incorporated by reference in its entirety into this application.

### BACKGROUND OF THE INVENTION

### 1. Technical Field

The present invention relates to a fiber-reinforced ceramic composite material honeycomb and a method of preparing the same.

### 2. Description of the Related Art

Among composite materials, carbon fiber, which was developed in Japan, is attracting considerable attention as a promising material which is stronger than iron and lighter than aluminum. Carbon fiber is made by heating an organic fiber in a nitrogen stream. In this procedure, an organic fiber is carbonized to be crystallized, and becomes light and strong. Currently, carbon fiber is used in solar cell panels, antennas, radars and the like.

The quality and performance of carbon fiber is changed depending on the raw material thereof. Carbon fibers are largely classified into two types of carbon fibers, that is, polyacrylonitrile (PAN) based carbon fibers and pitch (aromatic hydrocarbon included in petroleum or coal) based carbon fibers. Further, carbon fibers are classified by mechanical properties such as tensile strength, elastic modulus and the like.

Meanwhile, a fiber-reinforced composite material is composed of a polymer resin matrix and a reinforcement fiber, is light, and has excellent physical properties. As the matrix, a natural resin, a synthetic polymer or the like is used, and, as the reinforcement fiber, an organic fiber or an inorganic fiber such as carbon fiber is used.

Meanwhile, since ceramic has high heat resistance, high hardness, excellent chemical resistance and excellent wear resistance and has a low ratio of specific gravity to strength, it can be used to reduce the weight of a composite material. However, ceramic is problematic in that it cannot be widely applied because it easily breaks (it is brittle).

Meanwhile, in relation to a honeycomb structure, Korean Patent Application No. 2007-0029786 discloses a diesel particulate filter (DPF) honeycomb structure for collecting particulate matter included in exhaust gas discharged from a diesel engine. However, this honeycomb structure is problematic in that its mechanical properties, thermal conductivity and the like are poor.

### SUMMARY OF THE INVENTION

Accordingly, the present invention has been devised to solve the above-mentioned problems, and an object of the present invention is to provide a fiber-reinforced ceramic composite material honeycomb including an outer shell and inner tube which are made of a fiber-reinforced ceramic composite material, and a method of preparing the same.

Another object of the present invention is to provide a fiber-reinforced ceramic composite material honeycomb which can greatly increase a design region for providing an orientation for mechanical properties such as toughness, thermal resistance, etc., thermal conductivity and the like using a carbon fiber such as a long fiber or a two-dimensional fabric, and a method of preparing the same.

Still another object of the present invention is to provide a fiber-reinforced ceramic composite material honeycomb which can be easily applied to honeycomb-applied appliances by winding a fiber in a desired shape.

In order to accomplish the above objective, an aspect of the present invention provides a fiber-reinforced ceramic composite material honeycomb, including: a plurality of inner tubes, each of which is made of a fiber-reinforced ceramic composite material; and an outer shell which is made of a fiber-reinforced ceramic composite material and which surrounds the plurality of inner tubes.

Another aspect of the present invention provides a method of preparing a fiber-reinforced ceramic composite material honeycomb, including the steps of: impregnating a carbon fiber or a silicon carbide (SiC) fiber with a polymer resin; winding the impregnated carbon fiber or silicon carbide (SiC) fiber to form an inner tube and an outer shell and then curing the inner tube and the outer shell; disposing the inner tube in the outer shell; carbonizing the inner tube and the outer shell; and melt ing a metal and infiltrating the molten metal into the inner tube and the outer shell.

### BRIEF DESCRIPTION OF THE DRAWINGS

The above and other objects, features and advantages of the present invention will be more clearly understood from the following detailed description taken in conjunction with the accompanying drawings, in which:
FIG. 1 is a flowchart showing a method of preparing a fiber-reinforced ceramic composite material according to an embodiment of the present invention;
FIG. 2 is a schematic view showing the step of forming the shapes of an inner tube and an outer shell by winding a carbon fiber or a silicon carbide (SiC) fiber in the method of preparing a fiber-reinforced ceramic composite material according to an embodiment of the present invention;
FIG. 3 is a schematic view showing the step of combining inner tubes with an outer shell in the method of preparing a fiber-reinforced ceramic composite material according to an embodiment of the present invention;
FIG. 4 is a schematic view showing the step of combining inner tubes with an outer shell in the method of preparing a fiber-reinforced ceramic composite material according to another embodiment of the present invention; and
FIG. 5 is a schematic view showing the step of carbonizing tubes and an outer shell and then melting a metal and infiltrating the molten metal into the tubes and outer shell in the method of preparing a fiber-reinforced ceramic composite material according to an embodiment of the present invention.

### DESCRIPTION OF THE PREFERRED EMBODIMENTS

Hereinafter, preferred embodiments of the present invention will be described in detail with reference to the attached drawings.

The present invention provides a fiber-reinforced ceramic composite material honeycomb, including: a plurality of inner tubes, each of which is made of a fiber-reinforced ceramic composite material; and an outer shell which is made of a fiber-reinforced ceramic composite material and which surrounds the plurality of inner tubes.

The fiber-reinforced ceramic composite material honeycomb, unlike a ceramic honeycomb prepared by extruding or press-molding ceramic powder, includes inner tubes made of a fiber-reinforced ceramic composite material and an outer shell made of a fiber-reinforced ceramic composite material and surrounding the inner tubes. The fiber-reinforced ceramic composite material honeycomb is characterized in that it can be uniformly dispersed with a fiber and has excellent mechanical properties and high thermal conductivity because each of the inner tubes and outer shell is made of a fiber-reinforced ceramic composite material.

The fiber may be a long fiber or a two-dimensional fabric (2D fabric). Specifically, since the fiber-reinforced ceramic composite material honeycomb includes a long fiber or a two-dimensional fabric, the ununiform dispersion of a fiber, occurring when it includes a short fiber, can be minimized, thus improving the mechanic properties and thermal conductivity thereof.

The section of each of the inner tubes may be polygonal or circular, but is not limited thereto. The inner tubes are disposed in the outer shell to constitute a unit cell of a honeycomb, and the shape and size of each of the inner tubes can be adjusted. For example, in the procedure of winding a two-dimensional fabric, the two-dimensional fabric may be wound such that a cylindrical inner tube having a circular section or a polygonal inner tube having a tetragonal or hexagonal section can be formed.

The section of the outer shell may be polygonal or circular, but is not limited thereto. Specifically, the outer shell may be configured such that the section thereof is polygonal or circular in accordance with an appliance provided with the fiber-reinforced ceramic composite material honeycomb.

The fiber-reinforced ceramic composite material may be prepared by melting a metal and infiltrating the molten metal into a fiber-reinforced carbon composite material. The metal may be at least one selected from the group consisting of silicon, aluminum, titanium, molybdenum, chromium, nickel and alloys thereof, but is not limited thereto. Preferably, the metal may be melted and infiltrated into the fiber-reinforced carbon composite material by depositing the metal in the fiber-reinforced carbon composite material or on carbide and then heat-treating the metal at 1400 to 1800°C under a vacuum atmosphere (10⁻¹ torr or more), but the present invention is not limited thereto. When the heat treatment of the metal is conducted in the above temperature range of 1400 to 1800°C, the metal is melted without being volatilized, and thus the molten metal can be easily infiltrated into the carbide.

The fiber-reinforced carbon composite material is prepared by impregnating a carbon fiber or a silicon carbide (SiC) fiber with a polymer resin and then carbonizing the impregnated carbon fiber or silicon carbide (SiC) fiber. Specifically, the polymer resin may be at least one selected from the group consisting of phenolic resins and pitches. Preferably, the polymer resin may be a phenolic resin, but is not limited thereto. The step of carbonizing the impregnated carbon fiber or silicon carbide (SiC) fiber may be conducted at a temperature of 500 to 2000°C under a nitrogen atmosphere or a vacuum atmosphere (10⁻² torr or more). Through the step of carbonizing the impregnated carbon fiber or silicon carbide (SiC) fiber, carbon provided from the polymer resin reacts with the carbon fiber or silicon carbide (SiC) fiber to form the fiber-reinforced carbon composite material.

Since the fiber-reinforced ceramic composite material honeycomb includes a long fiber or a two-dimensional fabric, it has excellent mechanical properties and high thermal conductivity. Therefore, the fiber-reinforced ceramic composite material honeycomb can be used in a filter for collecting exhaust gas as well as a honeycomb for an absorber used in a solar heat power generation system and a honeycomb for structure reinforcement. Particularly, the fiber-reinforced ceramic composite material honeycomb can be used in a diesel particular filter (DPF) for collecting particulate matter (fine particles) included in exhaust gas discharged from a diesel engine.

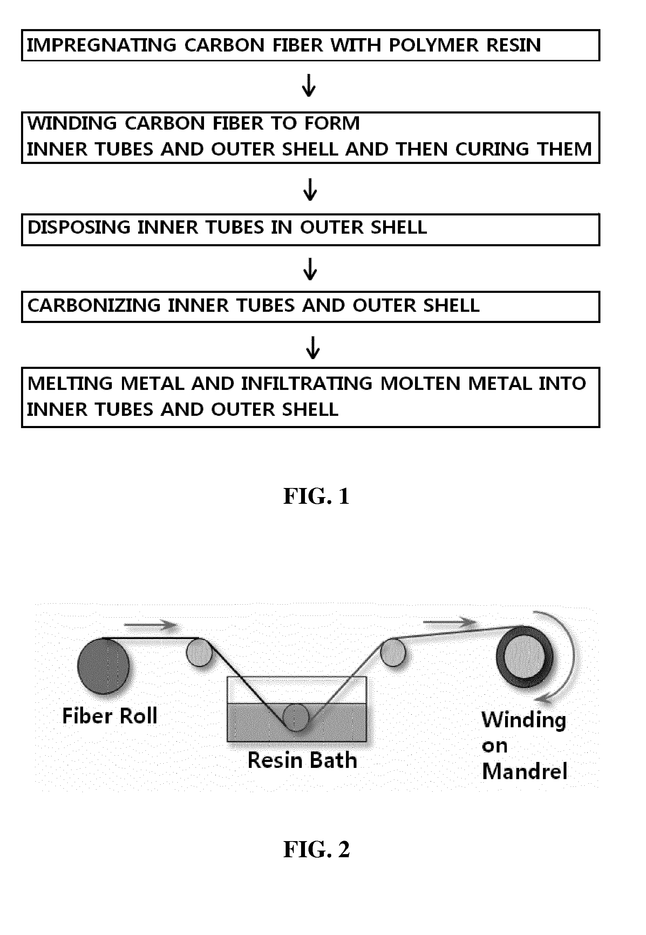

As shown in FIG. 1, the present invention provides a method of preparing a fiber-reinforced ceramic composite material honeycomb, including the steps of: (A) impregnating a carbon fiber or a silicon carbide (SiC) fiber with a polymer resin; (B) winding the impregnated carbon fiber or silicon carbide (SiC) fiber to form an inner tube and an outer shell and then curing the inner tube and the outer shell; (C) disposing the inner tube in the outer shell; (D) carbonizing the inner tube and the outer shell; and (E) melting a metal and infiltrating the molten metal into the inner tube and the outer shell.

Hereinafter, the method of preparing a fiber-reinforced ceramic composite material honeycomb according to the present invention will be described in detail by steps.

First, in step (A), a carbon fiber or a silicon carbide (SiC) fiber is impregnated with a polymer resin. As shown in FIG. 2, a carbon fiber or silicon carbide (SiC) fiber is immersed into a resin bath filled with a polymer resin by a fiber roll. Specifically, the polymer resin may be at least one selected from the group consisting of phenolic resins and pitches. Preferably, the polymer resin may be a phenolic resin, but is not limited thereto.

The carbon fiber may be a long fiber or a two-dimensional carbon fiber. Specifically, since the fiber-reinforced ceramic composite material honeycomb includes a long fiber or a two-dimensional fabric, the ununiform dispersion of a fiber, occurring when it includes a short fiber, can be minimized, thus improving the mechanic properties and thermal conductivity thereof.

Second, in step (B), the impregnated carbon fiber or silicon carbide (SiC) fiber is wound to form an inner tube and an outer shell, and then the inner tube and the outer shell is cured. Specifically, as shown in FIG. 2, the carbon fiber or silicon carbide (SiC) fiber is wound while it being impregnated with the polymer resin to form an inner tube and an outer shell. In this case, the carbon fiber or silicon carbide (SiC) fiber may be wound such that each of the inner tube and the outer shell has a polygonal or circular section.

A fiber-reinforced polymer composite material is formed from the carbon fiber or silicon carbide (SiC) fiber by the procedure of forming the inner tube and outer shell and then curing them.

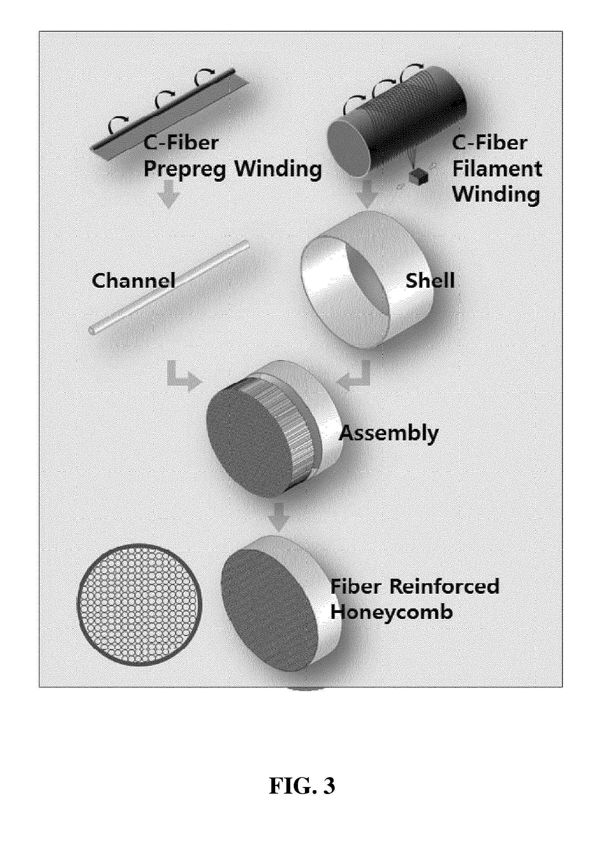

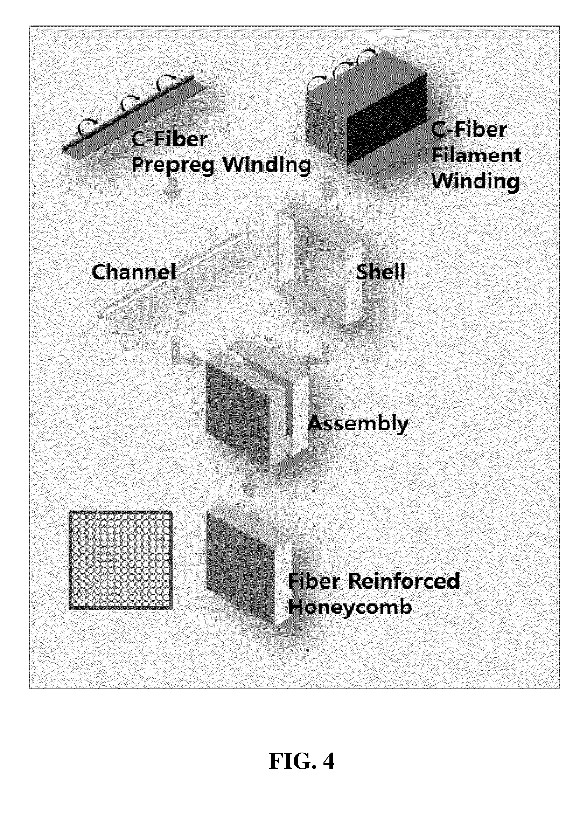

Third, in step (C), the inner tubes are disposed in the outer shell. As shown in FIG. 3 or FIG. 4, the outer shell serves to fix a plurality of inner tubes and maintain the form of the fiber-reinforced ceramic composite material honeycomb, and the inner tubes serve as unit cells of the honeycomb.

Fourth, in step (D), the inner tubes and the outer shell are carbonized. Specifically, the step of carbonizing the inner tubes and the outer shell may be conducted at a temperature of 500 to 2000°C under a nitrogen atmosphere or a vacuum atmosphere (10⁻² torr or more). Through the step of carbonizing the inner tubes and the outer shell, carbon provided from the polymer resin reacts with the carbon fiber or silicon carbide (SiC) fiber to form the fiber-reinforced carbon composite material.

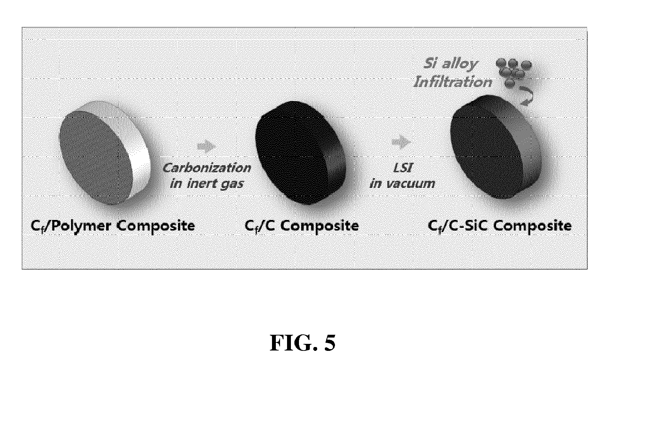

Fifth, in step (E), a metal is melted and infiltrated into the inner tubes and the outer shell. As shown in FIG. 5, when the metal is melted and infiltrated into the inner tubes and the outer shell, the metal reacts with the fiber-reinforced carbon composite material to form a fiber-reinforced ceramic composite material. The metal used in the melting and infiltration may be at least one selected from the group consisting of silicon, aluminum, titanium, molybdenum, chromium, nickel and alloys thereof, but is not limited thereto.

Preferably, the metal may be melted and infiltrated into the fiber-reinforced carbon composite material by depositing the metal in the fiber-reinforced carbon composite material or on carbide and then heat-treating the metal at 1400 to 1800°C under a vacuum atmosphere (10⁻¹ torr or more), but the present invention is not limited thereto. When the heat treatment of the metal is conducted in the above temperature range of 1400 to 1800°C, the metal is melted without being volatilized, and thus the molten metal can be easily infiltrated into the carbide.

Hereinafter, the present invention will be described in more detail with reference to the following Examples. However, these Examples are set forth to illustrate the present invention, and the scope of the present invention is not limited thereto.

### <Example 1>

As shown in FIG. 2, by means of a 4-axis winding process, a carbon fiber (Toray T-700) was impregnated with a thermosetting phenol resin KRD-HM2, Kolon) as a polymer resin, and the impregnated carbon fiber was wound on a mandrel (165 mm diameter x 800 mm length) at an angle of 60° to form a plurality of inner tubes (circular section, diameter: 2.56 mm, length: 150 mm, thickness: 0.3 mm) and an outer shell (circular section, diameter: 50 mm, length: 150 mm, thickness: 5 mm), and then the plurality of inner tubes and the outer shell were cured. In this case, the carbon fiber for forming the inner tubes is a two-dimensional carbon fiber, and the carbon fiber for forming the outer shell is a long fiber. The long fiber was wound on the rotating mandrel to form the outer shell.

Subsequently, the plurality of inner tubes was surrounded by the outer shell, and was then combined with the outer shell using the fiber impregnated with the thermosetting phenol resin to prepare a fiber-reinforced honeycomb.

The prepared fiber-reinforced honeycomb was carbonized at 1000°C under a vacuum atmosphere, and then silicon (Si) was melted and infiltrated into the carbonized fiber-reinforced honeycomb at 1650°C under a vacuum atmosphere to prepare a fiber-reinforced ceramic composite material honeycomb.

### <Example 2>

As shown in FIG. 2, by means of a 4-axis winding process, a carbon fiber (Toray T-700) was impregnated with a thermosetting phenol resin KRD-HM2, Kolon) as a polymer resin, and the impregnated carbon fiber was wound on a mandrel (165 mm diameter x 800 mm length) at an angle of 60° to form a plurality of inner tubes (circular section, diameter: 2.56 mm, length: 150 mm, thickness: 0.3 mm) and an outer shell (circular section, diameter: 50 mm, length: 150 mm, thickness: 5 mm), and then the plurality of inner tubes and the outer shell were cured. In this case, the carbon fiber for forming the inner tubes and the outer shell is a two-dimensional carbon fiber. The two-dimensional fiber was wound on the previously-provided frame to form the outer shell.

Subsequently, the plurality of inner tubes was surrounded by the outer shell, and was then combined with the outer shell using the fiber impregnated with the thermosetting phenol resin to prepare a fiber-reinforced honeycomb.

The prepared fiber-reinforced honeycomb was carbonized at 1000°C under a vacuum atmosphere, and then silicon (Si) was melted and infiltrated into the carbonized fiber-reinforced honeycomb at 1650°C under a vacuum atmosphere to prepare a fiber-reinforced ceramic composite material honeycomb.

As described above, the fiber-reinforced ceramic composite material honeycomb of the present invention can greatly increase a design region for providing an orientation to mechanical properties such as toughness, thermal resistance, etc., thermal conductivity and the like because it includes an outer shell and inner tubes which are made of a fiber-reinforced ceramic composite material.

Further, the fiber-reinforced ceramic composite material honeycomb of the present invention can be easily applied to honeycomb-applied appliances by winding a fiber in a desired shape.

Further, according to the fiber-reinforced ceramic composite material honeycomb of the present invention, a long fiber or a two-dimensional fabric is used, and thus such fibers are uniformly dispersed, thereby improving mechanical properties, thermal conductivity and the like.

Although the preferred embodiments of the present invention have been disclosed for illustrative purposes, those skilled in the art will appreciate that various modifications, additions and substitutions are possible, without departing from the scope and spirit of the invention as disclosed in the accompanying claims.

## Claims

1. A fiber-reinforced ceramic composite material honeycomb, comprising:
a plurality of inner tubes, each of which is made of a fiber-reinforced ceramic composite material; and
an outer shell which is made of a fiber-reinforced ceramic composite material and which surrounds the plurality of inner tubes.

2. The fiber-reinforced ceramic composite material honeycomb of claim 1, wherein the fiber-reinforced ceramic composite material is prepared by melting a metal and infiltrating the molten metal into a fiber-reinforced carbon composite material.

3. The fiber-reinforced ceramic composite material honeycomb of claim 2, wherein the metal is at least one selected from the group consisting of silicon, aluminum, titanium, molybdenum, chromium, nickel and alloys thereof

4. The fiber-reinforced ceramic composite material honeycomb of claim 2, wherein the fiber-reinforced carbon composite material is prepared by impregnating a carbon fiber or a silicon carbide (SiC) fiber with a polymer resin and then carbonizing the impregnated carbon fiber or silicon carbide (SiC) fiber.

5. The fiber-reinforced ceramic composite material honeycomb of claim 1, wherein the fiber is a long fiber or a two-dimensional fabric.

6. The fiber-reinforced ceramic composite material honeycomb of claim 1, wherein each of the inner tubes has a polygonal or circular section.

7. The fiber-reinforced ceramic composite material honeycomb of claim 1, wherein the outer shell has a polygonal or circular section.

8. A method of preparing a fiber-reinforced ceramic composite material honeycomb, comprising the steps of
impregnating a carbon fiber or a silicon carbide (SiC) fiber with a polymer resin;
winding the impregnated carbon fiber or silicon carbide (SiC) fiber to form an inner tube and an outer shell and then curing the inner tube and the outer shell;
disposing the inner tube in the outer shell;
carbonizing the inner tube and the outer shell; and
melting a metal and infiltrating the molten metal into the inner tube and the outer shell.

9. The method of claim 8, wherein the carbon fiber is a long fiber or a two-dimensional carbon fiber.

10. The method of claim 8, wherein the step of carbonizing the inner tube and the outer shell is conducted at 500 to 2000 °C.

11. The method of claim 8, wherein, in the step of melting a metal and infiltrating the molten metal into the inner tube and the outer shell, the metal is at least one selected from the group consisting of silicon, aluminum, titanium, molybdenum, chromium, nickel and alloys thereof.

12. The method of claim 8, wherein the impregnated carbon fiber or silicon carbide (SiC) fiber is wound to form an inner tube or outer shell having a polygonal or circular section.

13. The method of claim 8, wherein the polymer resin is at least one selected from the group consisting of phenolic resins and pitches.
